# EUROPEAN PATENT APPLICATION

(11) **EP 3 661 044 A1**
(43) Date of publication of application: **03.06.2020**
(21) Application number: 19211649.9
(22) Date of filing: 26.11.2019
(51) Int. Cl.: H02P 9/48, H05K 5/02, F02B 63/04, H02P 9/10, H05K 5/04, F01P 11/14

(54) **GENERATOR SET**

(30) Priority: 29.11.2018 ES 201831856 U
(71) Applicant: Grupos Electrogenos Europa, S.A., 50450 Muel (Zaragoza) (ES)
(72) Inventor: SANTA BÁRBARA RECIO, José María, 50450 Muel Zaragoza (ES)
(74) Representative: Schäfer, Matthias W.

(57) **Abstract**

A generator set that has an electronic converter to provide electrical energy, in which the heat engine rotates at a variable speed, related to the power demanded by the load, enabling fuel consumption to be reduced compared to a traditional generator of the same power rating, with the consequent savings in operating costs.

## Description

The present description relates, as its title indicates, to a generator set that has an electronic converter to supply electrical energy and in which the heat engine rotates at variable speed, depending on the power demanded by the load.

### Field of the invention

The invention relates to the field of generator sets, specifically variable speed generator sets.

### Current state of the art

Currently, the pursuit of energy savings and energy efficiency is a need that is driven by the greater social awareness of this matter and the increase in energy costs. Energy should only be used when it is essential.

Up to now, this problem has not affected generator sets, given the actual nature of these systems. This type of device includes an electric generator or alternator, which is attached to a heat engine of different types - diesel, petrol, gas or any other -, and at its output, generates alternating current electrical energy at a voltage, defined by the alternator winding, and frequency, defined by the speed at which the combustion engine rotates. In view of this, and of the need for frequencies to be very stable to ensure the connected loads operate properly, it is critical that the engine rotates in a stable fashion. Variations in rotation speed lead to changes in the output frequency and therefore, potential problems in the connected loads. This means that the heat engine has to be made to rotate at the same speed, regardless of the load that is connected to its output.

The use of heat engines that operate at variable speed is already known and used nowadays but is always restricted to applications with loads fed by direct current voltage. These types of devices use alternators with integrated rectifiers that deliver a constant fixed voltage at their output.

Such devices with constant voltage output are described in the following patents, among others: ES 2459940T3 *"Sistema y procedimiento de control de un generador eléctrico",* ES 2225715T3 *"Conjunto de circuitos",* CH701753A1 *"Generatorsystem mit direct netzgekoppeltem Generator und Verfahren zum Durchfahren von Netztörungen*", US20090072772 and US20090045761 *"Diesel-Electric drive system having a synchronous generator with permanent magnet excitation",* and CN101162885 *"Speed changing diesel generator*", but equipment of this type continues to pose problems with sudden load variations which cause peaks of current that in many cases it is not able to provide, thus producing supply dips or losses, unless the generator is oversized, which greatly increases its cost and operation and causes premature wear due to its operating outside its optimal range. In addition, these types of generators have not been used so far to obtain current in three phases and neutral, which enables better use to be made of the energy generated.

### Description of the invention

To solve the currently existing problems of energy consumption, greenhouse gas emissions and dependence on fossil fuels while improving the current state of the art, a generator set capable of supplying electrical energy at a fixed frequency and voltage has been devised, using a combustion heat engine rotating at variable speed.

The generator set comprises a heat engine powered by different fuels, - for example diesel, petrol or gas, - which rotates at different speeds depending on the type of engine used. This heat engine is attached to an electric machine, which may be an alternator or any other type of electric machine, such as a permanent magnet alternator, a reluctance machine, or any other type of generator that creates different voltage and frequency depending on the speed at which the combustion engine rotates.

The electrical output of the electric machine is connected to a converter module that is responsible for providing alternating current voltage to the output connectors, for the load. This converter module transforms the voltage and variable frequency into direct current voltage by means of a DC/AC inverter module. The next step is an inverting stage that uses that DC voltage to produce an AC voltage of an amplitude and frequency fixed by the converter configuration.

It also has a supercapacitor energy storage system that gives the direct current bus before the inverter additional capacity to supply current, so that it reacts more quickly to load fluctuations by using its stored energy while it requests the combustion engine to increase its speed in order to supply power to the load.

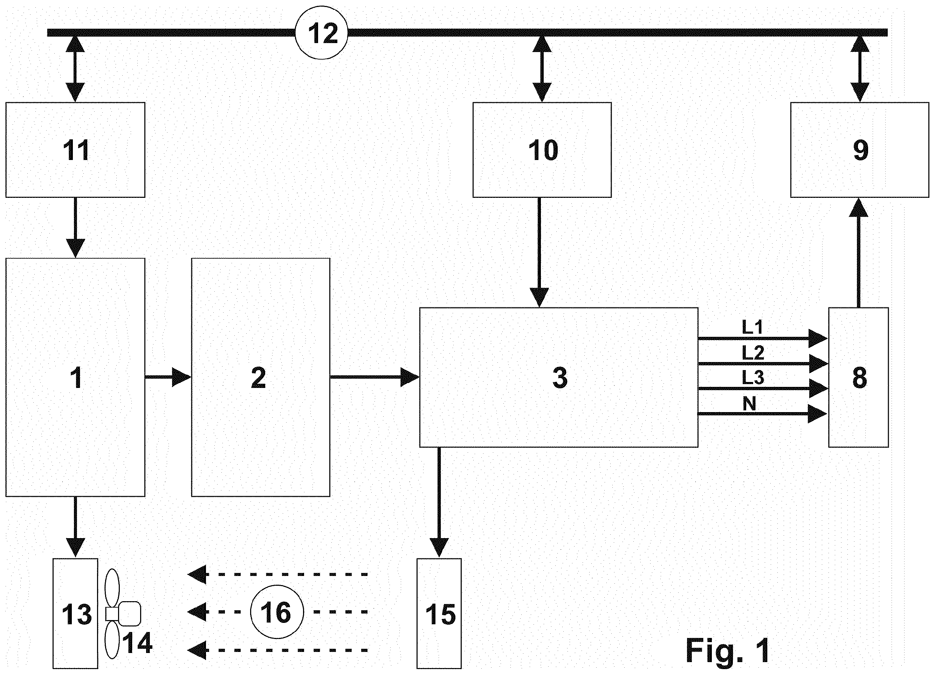

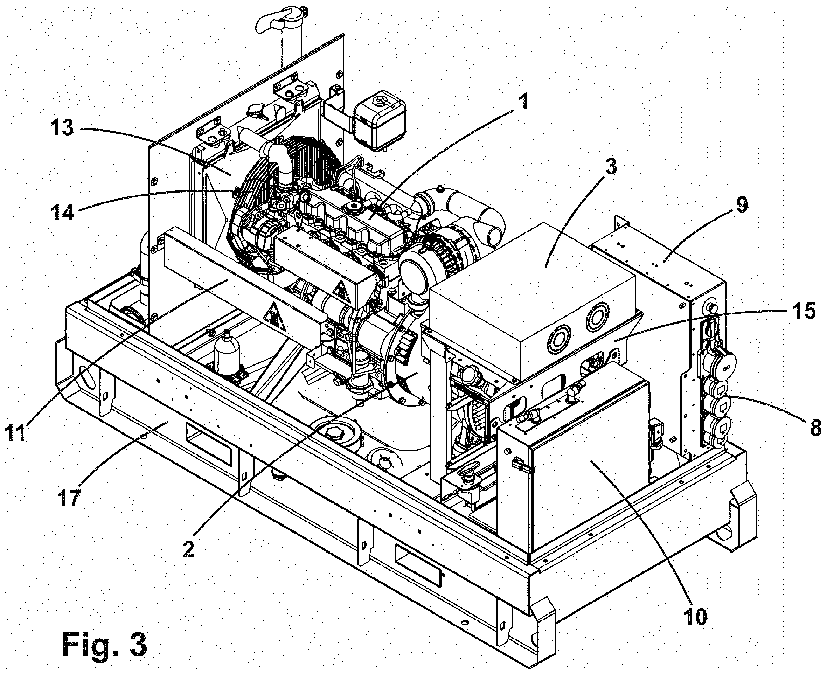

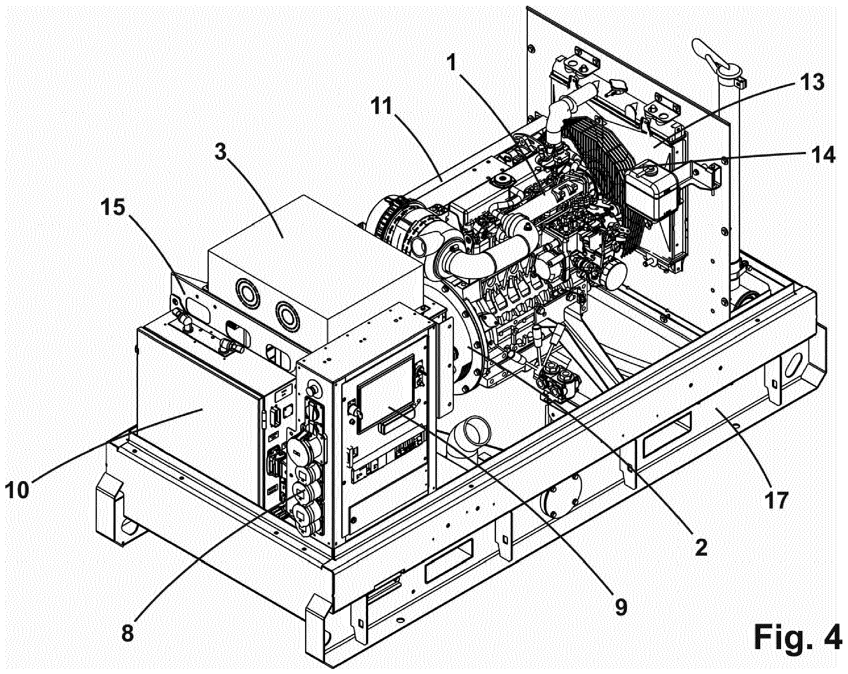

As shown in Figures 1, 2, 3 and 4, the variable speed generator set can be seen to comprise:
- a heat engine (1), with a variable rotation speed, whose rotating shaft is connected to
- an electric machine (2) generating energy, whose electrical output is in turn connected to
- an electronic converter module (3), equipped with one or more energy storage devices (7), whose output is connected to output connectors for the load (8), where an AC voltage of an amplitude and frequency fixed by the converter module (3) is obtained,
- a generator control module (9), equipped with a display and keyboard, also electrically connected to the output connectors for the load (8),
- a converter module control module (10), connected to the converter module (3), and
- an engine control module (11), connected to the heat engine (1),
in which the three control modules (9, 10, 11) are interconnected to each other and the entire set of units is supported by a metal chassis (17) and covered by a casing.

The three control modules (9, 10, 11) are interconnected to each other by means of a digital communications bus (12), which shall preferably be of the CANbus type.

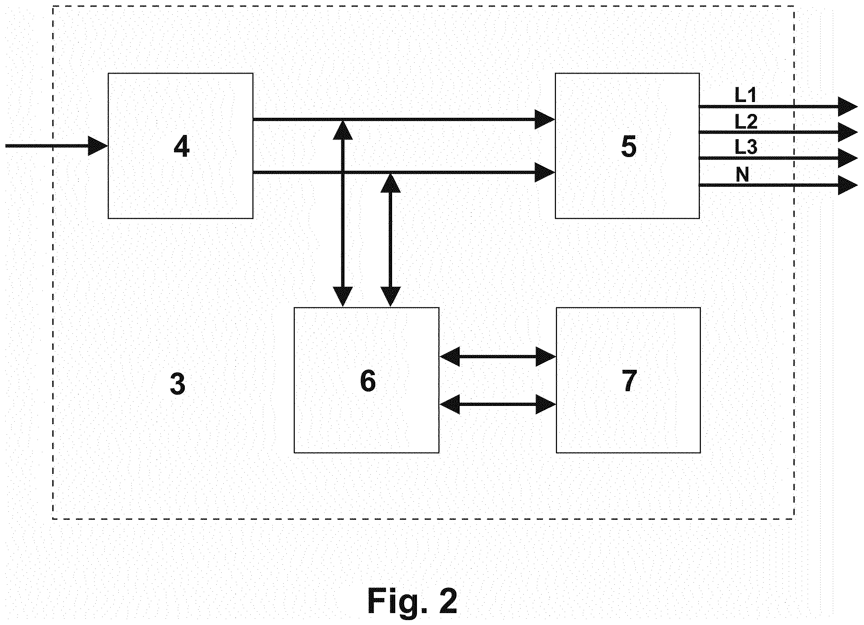

Figure 2 shows that the electronic converter module (3) comprises
- an AC/DC rectifier module (4), whose DC voltage output is connected to the input of
- a DC/AC inverter module (5), whose AC voltage output is connected to the output connectors for the load (8),
- and a storage control module (6), also connected to the DC voltage output of the AC/DC rectifier module (4) and which is associated with one or more of the energy storage devices (7).

The energy storage devices (7) can be chosen from any group formed by Li-Ion batteries, lead batteries and supercapacitors, and may be a combination thereof.

This energy storage device (7) provides the DC bus before the DC/AC inverter module (5) with additional capacity to supply current, so that it reacts more quickly to rapid variations or surges of the load associated with the output connectors for the load (8), using the stored energy, while the heat engine (1) is requested to increase speed to supply power to the load.

The heat engine (1) is a combustion type engine and its fuel is chosen from the group formed by diesel, petrol or gas. This heat engine (1) comprises a radiator (13) associated with a forced ventilation device (14), which creates a flow of cooling air (16), while the electronic converter module (3) also has a radiator (15) for heat evacuation, inserted at the input of the course of the cooling air flow (16), providing better cooling of the electronic circuits using a passive radiator (13) without any need for additional forced ventilation.

The electric machine (2) generating energy may be a permanent magnet alternator or a reluctance machine, or any other type of generator that creates a different voltage and frequency depending on the rotation speed of the heat engine (1). The electrical energy at the output connectors for the load (8) is preferably in the form of three-phase voltage, with three conductors L1, L2 and L3 plus neutral N.

It is envisaged that the metal chassis (17) shall be provided with wheels, openings for a pallet-jack or hooks for transportation and lifting, or a combination of thereof.

### Advantages of the invention

The variable speed generator set presented here affords multiple advantages over currently available equipment, the most important being that it allows for a reduction of up to approximately 60% in fuel consumption compared to a traditional generator with the same power rating, with the consequent savings in operating costs.

Another advantage of the present invention is that, due to the electronic output stage, its capacity to provide current is approximately 4 times greater than a traditional generator of its power rating, thus enabling it to replace generators of a greater volume, weight and economic cost.

Furthermore, another added advantage it brings is that, while a traditional combustion engine generator must always maintain a fixed speed, since the output frequency is proportional to the engine's speed of rotation, this device can make the combustion engine run at higher speed, taking advantage of its power delivery, reducing the size of the combustion engine required to provide a given power.

Another advantage inherent in the use of variable speed technology in the combustion engine is that it works at its optimal regime for any power delivery, which optimises its service life, thus improving its cost performance and reducing its wear and tear.

It is also worth underlining the fact that, because the electronic circuit radiator is located at the input of the course of the cooling air flow of the heat engine, it provides better cooling of the electronic circuits using a passive radiator, without any need for additional forced ventilation for them. This results in greater reliability and durability of the electronic parts and a lower number of failures.

### Description of the figures

To gain a better understanding of the object of this invention, a preferred practical embodiment of a variable speed generator set has been depicted in the attached drawing.

In the drawing,
Figure -1- shows a simplified block diagram of the invention.
Figure -2- shows a simplified block diagram of the electronic converter module.
Figure -3- shows a perspective view of a variable speed generator set, without the casing.
Figure -4- shows another perspective view, from the opposite side to the previous one, of a variable speed generator set without the casing.

### Preferred Embodiment of the Invention

The constitution and features of the invention may be better understood from the following description made with reference to the attached figures.

As shown in Figures 1, 2, 3 and 4, the variable speed generator set can be seen to comprise
- a heat engine (1), with variable rotation speed, whose rotating shaft is connected to
- an electric machine (2) generating energy, whose electrical output is in turn connected to
- an electronic converter module (3), equipped with one or more energy storage devices (7), whose output is connected to output connectors for the load (8), where an AC voltage of amplitude and frequency fixed by the converter module (3) is obtained,
- a generator control module (9), equipped with a display and keyboard, also electrically connected to the output connectors for the load (8),
- a converter module control module (10), connected to the converter module (3), and
- an engine control module (11), connected to the heat engine (1),
the aforementioned generator control module (9), converter module control module (10) and engine control module (11) being interconnected to each other, and the entire assembly being supported by a metal chassis (17) and covered by a casing.

The generator control modules (9), the converter module control module (10) and the engine control module (11) are interconnected to each other by means of a digital communications bus (12), which shall preferably be of the CANbus type.

Figure 2 shows that the electronic converter module (3) comprises
- an AC/DC rectifier module (4), whose DC voltage output is connected to the input of
- a DC/AC inverter module (5), whose AC voltage output is connected to the output connectors for the load (8),
- and a storage control module (6), also connected to the DC voltage output of the AC/DC rectifier module (4) and which is associated with one or more of the energy storage devices (7).

The energy storage devices (7) are chosen from the group formed by Li-Ion batteries, lead batteries and supercapacitors, and may be a combination thereof.

This energy storage device (7) provides the DC bus before the DC/AC inverter module (5) with additional capacity to supply current, so that it reacts more quickly to rapid variations or surges of the load associated with the output connectors for the load (8), using the energy stored, while the heat engine (1) is requested to increase speed to supply power to the load.

The heat engine (1) is a combustion-type engine and its fuel is chosen from the group formed by diesel, petrol or gas. This heat engine (1) comprises a radiator (13) associated with a forced ventilation device (14), which creates a flow of cooling air (16), while the electronic converter module (3) also has a radiator (15) for heat evacuation inserted at the input of the course of the cooling air flow (16), providing better cooling of the electronic circuits using a passive radiator (13) without any need for additional forced ventilation.

The electric machine (2) generating energy may be a permanent magnet alternator or a reluctance machine, or any other type of generator that creates a different voltage and frequency depending on the rotation speed of the heat engine (1). The electrical energy at the output connectors for the load (8) is preferably in the form of three-phase voltage, with three conductors L1, L2 and L3 plus neutral N.

It is envisaged that the metal chassis (17) shall be provided with wheels, openings for a pallet-jack or hooks for its transportation or lifting, or a combination thereof.

A person skilled in the art will readily understand that the characteristics of different embodiments can be combined with the characteristics of other possible embodiments, provided that such a combination is technically possible.

All information referring to examples or embodiments forms part of the description of the invention.

## Claims

1. A variable speed generator set of the type used to generate electrical energy autonomously and portably, **characterised in that** it comprises
- a heat engine (1), with variable rotation speed, whose rotating shaft is connected to
- an electric machine (2) generating energy, whose electrical output is in turn connected to
- an electronic converter module (3), equipped with one or more energy storage devices (7), whose output is connected to output connectors for the load (8), where an AC voltage of amplitude and frequency fixed by the converter module (3) is obtained,
- a generator control module (9), equipped with a display and keyboard, also connected to the output connectors for the load (8),
- a converter module control module (10), connected to said converter module (3), and
- an engine control module (11) connected to the heat engine (1),
the aforementioned generator control module (9), converter module control module (10) and engine control module (11) being interconnected to each other, and the entire assembly being supported by a metal chassis (17) and covered by a casing.

2. A variable speed generator set according to the preceding claim, **wherein** the electronic converter module (3) comprises
- an AC/DC rectifier module (4), whose DC voltage output is connected to the input of
- a DC/AC inverter module (5), whose AC voltage output is connected to the output connectors for the load (8),
- and a storage control module (6), also connected to the DC voltage output of the AC/DC rectifier module (4) and which is associated with one or more energy storage devices (7).

3. A variable speed generator set according to any of the preceding claims, **wherein** the energy storage devices (7) are selected from the group formed by Li-Ion batteries, lead batteries and supercapacitors.

4. A variable speed generator set according to any of the preceding claims, **wherein** the generator control module (9), converter module control module (10) and engine control module (11) are interconnected to each other by a digital communications bus (12).

5. A variable speed generator set according to Claim 4, **wherein** the communications bus (12) is of the CANbus type.

6. A variable speed generator set according to any of the preceding claims, **wherein** the heat engine (1) is of the combustion type and its fuel is chosen from the group formed by diesel, petrol and gas.

7. A variable speed generator set according to any of the preceding claims, **wherein** the heat engine (1) includes a radiator (13) associated with a forced ventilation device (14), which creates a flow of cooling air (16), and the electronic converter module (3) also has a radiator (15) for heat evacuation, inserted at the input of the course of the cooling air flow (16).

8. A variable speed generator set according to any of the preceding claims, **wherein** the electric machine (2) generating energy is chosen from the group formed by permanent magnet alternator, reluctance machine, and any other type of generator that creates a different voltage and frequency depending on the rotation speed of the heat engine (1).

9. A variable speed generator set according to any of the preceding claims, **wherein** the electrical energy at the output connectors for the load (8) is available in the form of three-phase voltage, with three conductors L1, L2 and L3 plus neutral N.

10. A variable speed generator set according to any of the preceding claims, **wherein** the metal chassis (17) is provided with wheels, openings for a pallet-jack or hooks for transportation and lifting, or a combination thereof.
